# EUROPEAN PATENT APPLICATION

(11) **EP 1 285 954 A2**
(43) Date of publication of application: **26.02.2003**
(21) Application number: 02017398.5
(22) Date of filing: 02.08.2002
(51) Int. Cl.: C09J 7/00

(54) **Adhesive tape**

(30) Priority: 07.08.2001 JP 2001239218
(71) Applicant: Nitto Denko Packaging System Corporation, Toyohashi-shi, Aichi 441-3194 (JP)
(72) Inventor: Iwami, Hiroyuki, Nitto Denko Pack. System Corp., Toyohashi-shi, Aichi 441-3194 (JP); Suzuki, Yukio, Nitto Denko Pack. System Corp., Toyohashi-shi, Aichi 441-3194 (JP); Satou, Hirotaka, Nitto Denko Pack. System Corp., Toyohashi-shi, Aichi 441-3194 (JP); Hashimoto, Yoshiki, Nitto Denko Pack. System Corp., Toyohashi-shi, Aichi 441-3194 (JP)
(74) Representative: Sajda, Wolf E., Dipl.-Phys.

(57) **Abstract**

An adhesive tape comprising a substrate and an adhesive agent layer formed on one surface of the substrate; wherein a shape of non-adhesive section having an edge in a width direction of the adhesive tape as a part of an outer periphery of the shape of non-adhesive section is formed consecutively in a length direction of the adhesive tape, in at least one edge region in the width direction of the adhesive tape on a surface thereof on which the adhesive agent layer is formed, and an area fraction of the non-adhesive sections on the surface on which the adhesive agent layer is formed is in the range of from 1 to 40%, is good in adhesive characteristic and peelability; and further, good in loading stability on the adherent to which it is adhered.

## Description

### BACKGROUND OF THE INVENTION

### Field of the invention

The present invention relates to an adhesive tape used in a tape-shape or a sheet-shape and a production method therefor. An adhesive tape of the present invention is used in various kinds of applications for an adhesive tape. An adhesive tape, for example, is used for packaging and baling where it is used being adhered to a corrugated fiberboard and the like.

### Description of the Background Art

As a prior art adhesive tape for packaging and baling a corrugated fiberboard or the like, an adhesive tape providing an adhesive agent layer formed by an adhesive agent made of a natural rubber, acrylics or the like on a substrate such as paper including kraft paper, cellophane or plastics, is used. Such the adhesive tape generally had the adhesive agent layer on one surface or both surfaces of the substrate in the entirety.

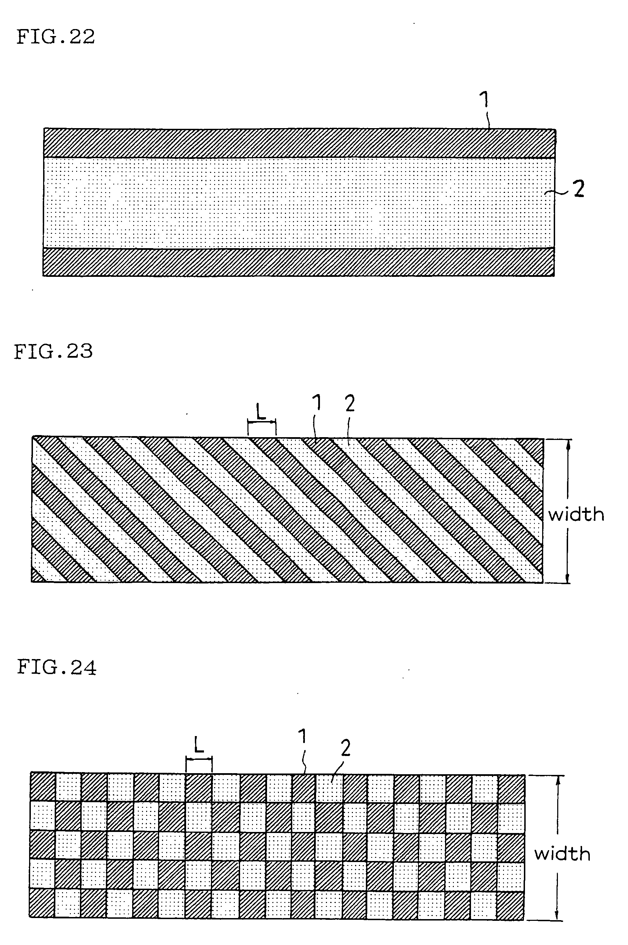

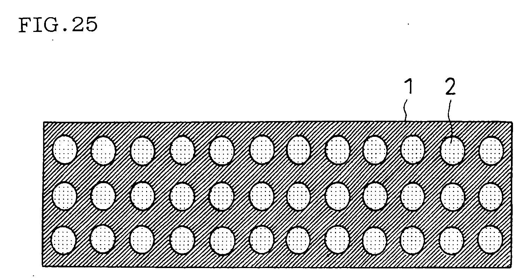

If the adhesive agent layer is formed on the entire surface of a substrate, a poor working efficiency is encountered because of lack of a finger lift portion or the like for peeling off when the adhesive tape is peeled from an adherent. Therefore, for the purpose to improve an efficiency in peel operation of an adhesive tape, kinds of adhesive tapes have been proposed: for example, a scheme (1) in which as shown in Fig. 22, a section where no adhesive agent is applied (a non-adhesive section or a dry edge) is provided along an edge of an adhesive tape and a scheme (2) in which as shown in Figs. 23 to 25, an adhesive agent is applied on a substrate in dotted, striped or checkered patterns.

Adhesive tapes of the above schemes (1) and (2) are, however, problematic since they are poor in adhesion performance such as an adhesive strength and a holding power because of the presence of a non-adhesive section or sections. In addition, as an adhesive tape of the above scheme (1), consideration is particularly given to a tape with linear non-adhesive sections each of the order of 10 mm in width at both edges of the tape in a tape width direction (double dry edged adhesive tape) ; if such a tape is adhered to a corrugated fiberboard and the package is loaded, the adhesive tape adhered to a counter surface is scratched to cause a dry edge to be caught by an external body, thereby producing a problem that a dry edge portion caught by the external body serves as a start point to peel off or the tape is broken at the dry edge portion. What's worse, there is a fear that another problem arises that foreign matter such as dust is mixed into a package through a region associated with a peeled or broken portion of an adhesive tape. On the other hand, as for an adhesive tape of the scheme (2), in which an adhesive agent layer is formed in dotted, striped or checkered patterns on a substrate and difficulty is encountered in a peel operation since fingers problematically do not well operated for the purpose to peel off the adhesive tape adhered on a counter surface. In addition, an adhesive tape of the scheme (2) also has a problem of loading stability similar to that of an adhesive tape of the scheme (1).

### SUMMARY OF THE INVENTION

It is an object of the present invention to provide an adhesive tape, with an adhesive agent layer formed on one surface of a substrate and non-adhesive sections on a surface on which the adhesive agent layer is formed, and good in adhesive characteristic; and a production method therefor.

It is another object of the present invention to provide an adhesive tape, good in peelability from an adherent to which it is adhered and good in loading stability of the adherent to which it is adhered; and a production method therefor.

The present inventors conducted serious studies on the above problem to solve and as a result, found that the above object was able to solve with an adhesive tape and a production method therefor shown below, having completed the present invention.

That is, the present invention is an adhesive tape comprising a substrate and an adhesive agent layer formed on one surface of the substrate;
wherein a shape of non-adhesive section having an edge in a width direction of the adhesive tape as apart of an outer periphery of the shape of non-adhesive section is formed consecutively in a length direction of the adhesive tape,
in at least one edge region in the width direction of the adhesive tape on a surface thereof on which the adhesive agent layer is formed,
and an area fraction of the non-adhesive sections on the surface on which the adhesive agent layer is formed is in the range of from 1 to 40%.

In the adhesive tape of the present invention, since the non-adhesive sections are formed only in the edge region in the width direction on the surface of the adhesive tape on which the adhesive agent layer is formed, a function of the adhesive agent layer can be sufficiently exerted without any loss thereof in a central section in the width direction thereof to enable an adhesive characteristic to be maintained in a good shape. On the other hand, in the non-adhesive sections formed at the edge region, with the shape having part of the outer periphery of which is the edge in the width direction thereof, the adhesive tape can be peeled off with ease and with good peelability when peeling-off of the adhesive tape is tried starting with the edge of such the adhesive tape. Furthermore, since the non-adhesive sections formed in the edge section of the adhesive tape have the adhesive agent layer in the vicinities of both end points of each non-adhesive section on the edge of the adhesive tape which is part of the outer periphery of the non-adhesive section, no chance arises that the non-adhesive sections serve the start point at which peeling-off is originated when scratching the adhesive tape even in a case where the adhesive tape is adhered to an adherent, leading to good loading stability.

In addition, an adhesive tape of the present invention is adjusted such that an area fraction of the non-adhesive sections on the surface of the adhesive tape on which the adhesive agent layer is formed is in the range of from 1 to 40% in order to enable exertion of both performances of the adhesive characteristic and peelability. If in excess of 40% in area fraction of the non-adhesive sections, the adhesive tape has a chance to be peeled off with ease starting at the non-adhesive sections because of shortage of adhesive strength by a friction and so on applied after the adhesive tape is adhered to an adherent. For this reason, an area fraction of the non-adhesive sections is preferably 40% or less and more preferably 30% or less. On the other hand, if an area fraction of the non-adhesive sections is less than 1%, a case arises where easiness of operation in peeling-off is degraded. For this reason, an area fraction of the non-adhesive sections is preferably 1% or more and more preferably 10% or more.

Note that an area fraction of the non-adhesive sections is a fraction of the non-adhesive sections on the surface of the adhesive tape on which the adhesive agent layer is formed, which is commonly an area fraction of a cut adhesive tape in a state where a tape is used in a cut shape. In a case where a width of an adhesive tape is on the order of from 25 to 50 mm, it is only required that the area fractions are satisfied by cut adhesive tapes obtained by cutting an original length into pieces each of 80 to 100 mm in length direction.

In the adhesive tape, a preferable embodiment is that the shape of non-adhesive section is such that the edge of the adhesive tape which is the outer periphery of the non-adhesive section and an outer periphery having a start point at least one end point on the edge form a tapered shape with a tip narrowing in size in a direction toward the interior. In a case where a shape of the non-adhesive section is of the tapered shape, the adhesive tape adhered to an adherent is easy to be peeled-off with easiness in peel operation. The above tapered shape is more preferably formed by outer peripheries having respective start points on the both end points on the edge. Note that a shape of the non-adhesive section has no specific limitation thereon but an outer periphery thereof may be linear or circular, thereby including a tapered shape with two curved side lines.

In the above adhesive tape, a preferable embodiment is that the shape of non-adhesive section is at least one shape selected from the group consisting of a triangle, a semi-circle, an ellipse, and a trapezoid, each of which has the edge of the adhesive tape with which the non-adhesive section is formed as one side. As shapes of a non-adhesive section having the respective above tapered shapes in a case where an edge of the adhesive tape is linear, there can be exemplified a triangle, a semi-circle, an ellipse, and a trapezoid, each of which has an edge of an adhesive tape with which the non-adhesive section is formed as one side.

In the above adhesive tape, a preferable embodiment is that the shape of non-adhesive section has an inner periphery. In a case where the non-adhesive section has an inner periphery in addition to the outer periphery, an inner section formed by the inner periphery serves as an adhesive section to enable improvement on an adhesive characteristic of the non-adhesive section formed at an end region of the adhesive tape.

In the above adhesive tape, a preferable embodiment is that an end point on the edge of the adhesive tape which is part of the outer periphery of the non-adhesive section is in contact with an end point on the edge of the adhesive tape which is part of the outer periphery of an adjacent non-adhesive section. Although it is allowed whether the non-adhesive section formed on the edge of the adhesive tape is in contact with or not in contact with the non-adhesive section adjacent thereto, non-adhesive sections consecutively formed adjacent to each other at the end points on the edge of the adhesive tape causes to adhesive characteristic to be well balanced with easiness of peel operation.

In the above adhesive tape, a preferable embodiment is that the non-adhesive sections are all of the same shape. Although non-adhesive sections may be all of the same shape or of respective different shapes, adhesive characteristic is more balanced with easiness of peel operation when being all of the same shape than when not.

In the above adhesive tape, a preferable embodiment is that the non-adhesive sections are formed in both edge regions of the adhesive tape in a width direction on the surface thereof on which the adhesive agent layer is formed and shapes of the non-adhesive sections at one edge region and shapes of the non-adhesive sections at the other edge region are in axial symmetry with respect to a center line in a width direction.

In the above adhesive tape, a preferable embodiment is that the non-adhesive sections are formed in both edge regions of the adhesive tape in a width direction on the surface thereof on which the adhesive agent layer is formed and shapes of the non-adhesive sections in one edge region and shapes of the non-adhesive sections at the other edge region are shifted between corresponding ones facing to each other in the both edge regions thereof in a length direction.

While non-adhesive sections have only to be provided in at least one edge region of the adhesive tape in a width direction on the surface thereof on which the adhesive agent layer is formed, it is preferably that the non-adhesive sections are provided in both edge regions and the non-adhesive sections in the both edge regions are preferably arranged in axial symmetry with respect to a central line in a width direction or shifted between corresponding ones facing to each other in the both edge regions thereof in a length direction thereof. Whether or not being arranged in axial symmetry or shifting in a length direction can be properly determined according to a shape of a non-adhesive section or the like. In a case where end points of the non-adhesive sections are adjacent to each other and shapes thereof is each of, for example, a triangle, a semicircle, an ellipse, and a trapezoid, a ratio in width length of the adhesive tape between a non-adhesive section and an adhesive section can be almost constant by shifting the non-adhesive sections each with a pattern length (L) by a half pattern length (L/2) between corresponding ones facing to each other in the both edge regions thereof in a length direction thereof.

In the above adhesive tape, a preferable embodiment is that the non-adhesive sections are formed by laminating a non-adhesive film as a layer on the adhesive agent layer. A formation method for the non-adhesive sections is not specifically limited as far as the sections are formed on the surface of the adhesive tape on which the adhesive agent layer is formed and for example, while the adhesive section or sections and the non-adhesive sections can be formed separately on a substrate, it is easier in production of an adhesive tape having the non-adhesive sections to laminate the non-adhesive sections using the non-adhesive film on the surface of the adhesive agent layer.

The present invention relates to a production method for an adhesive tape comprising the steps of:
forming a non-adhesive film as a layer, in which non-adhesive sections are formed, on the opposite surface of a substrate of the adhesive tape to one surface thereof on which an adhesive agent layer is formed;
thereafter, winding the substrate into a roll;
then, rewinding the roll to transfer the non-adhesive film onto the one surface on which the adhesive agent layer is formed to form the non-adhesive sections.

A production method for an adhesive tape of the present invention is not limited to the above method, but for example, an adhesive tape of the present invention can be produced by the above production method.

### BRIEF DESCRIPTION OF THE DRWAINGS

Fig. 1 is one example of a top view of a surface of an adhesive tape of the present invention, on which an adhesive agent layer is formed;
Fig. 2 is one example of a top view of a surface of an adhesive tape of the present invention, on which an adhesive agent layer is formed;
Fig. 3 is one example of a top view of a surface of an adhesive tape of the present invention, on which an adhesive agent layer is formed;
Fig. 4 is one example of a top view of a surface of an adhesive tape of the present invention, on which an adhesive agent layer is formed;
Fig. 5 is one example of a top view of a surface of an adhesive tape of the present invention, on which an adhesive agent layer is formed;
Fig. 6 is one example of a top view of a surface of an adhesive tape of the present invention, on which an adhesive agent layer is formed;
Fig. 7 is one example of a top view of a surface of an adhesive tape of the present invention, on which an adhesive agent layer is formed;
Fig. 8 is one example of a top view of a surface of an adhesive tape of the present invention, on which an adhesive agent layer is formed;
Fig. 9 is one example of a top view of a surface of an adhesive tape of the present invention, on which an adhesive agent layer is formed;
Fig. 10 is one example of a top view of a surface of an adhesive tape of the present invention, on which an adhesive agent layer is formed;
Fig. 11 is one example of a top view of a surface of an adhesive tape of the present invention, on which an adhesive agent layer is formed;
Fig. 12 is one example of a top view of a surface of an adhesive tape of the present invention, on which an adhesive agent layer is formed;
Fig. 13 is one example of a top view of a surface of an adhesive tape of the present invention, on which an adhesive agent layer is formed;
Fig. 14 is one example of a top view of a surface of an adhesive tape of the present invention, on which an adhesive agent layer is formed;
Fig. 15 is one example of a top view of a surface of an adhesive tape of the present invention, on which an adhesive agent layer is formed;
Fig. 16 is one example of a top view of a surface of an adhesive tape of the present invention, on which an adhesive agent layer is formed;
Fig. 17 is one example of a top view of a surface of an adhesive tape of the present invention, on which an adhesive agent layer is formed;
Fig. 18 is one example of a top view of a surface of an adhesive tape of the present invention, on which an adhesive agent layer is formed;
Fig. 19 is one example of a top view of a surface of an adhesive tape of the present invention, on which an adhesive agent layer is formed;
Fig. 20 is one example of a sectional view of an adhesive tape of the present invention;
Fig. 21 is one example of a sectional view of an adhesive tape of the present invention;
Fig. 22 is one example of a top view of a surface of a prior art adhesive tape, on which an adhesive agent layer is formed;
Fig. 23 is one example of a top view of a surface of a prior art adhesive tape, on which an adhesive agent layer is formed;
Fig. 24 is one example of a top view of a surface of a prior art adhesive tape, on which an adhesive agent layer is formed; and
Fig. 25 is one example of a top view of a surface of a prior art adhesive tape, on which an adhesive agent layer is formed.

### DESCRIPTION OF THE PREFERRED EMBODIMENTS

Description will be given of an adhesive tape of the present invention below with reference to the accompanying drawings:

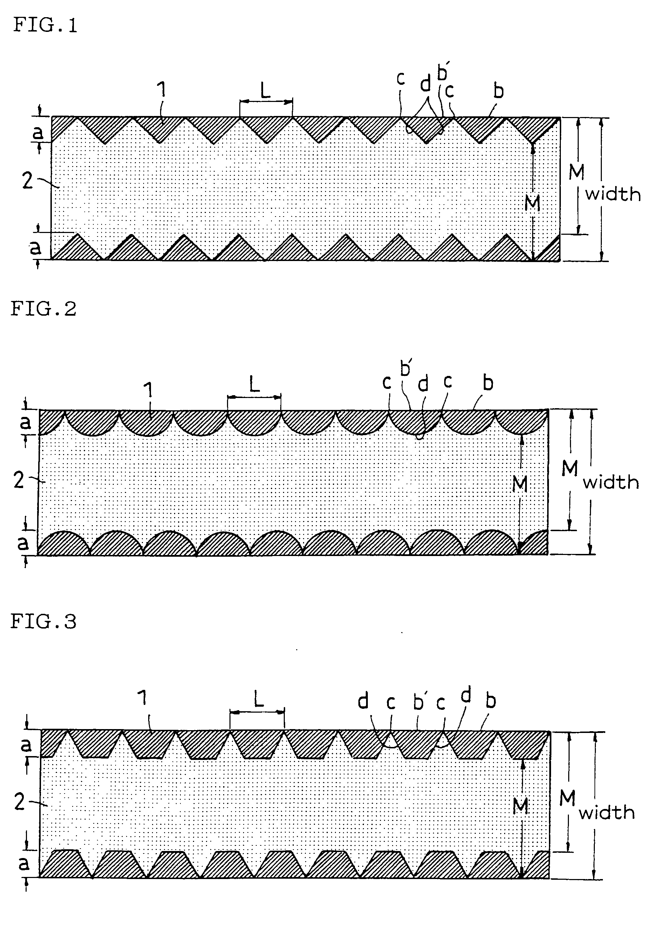

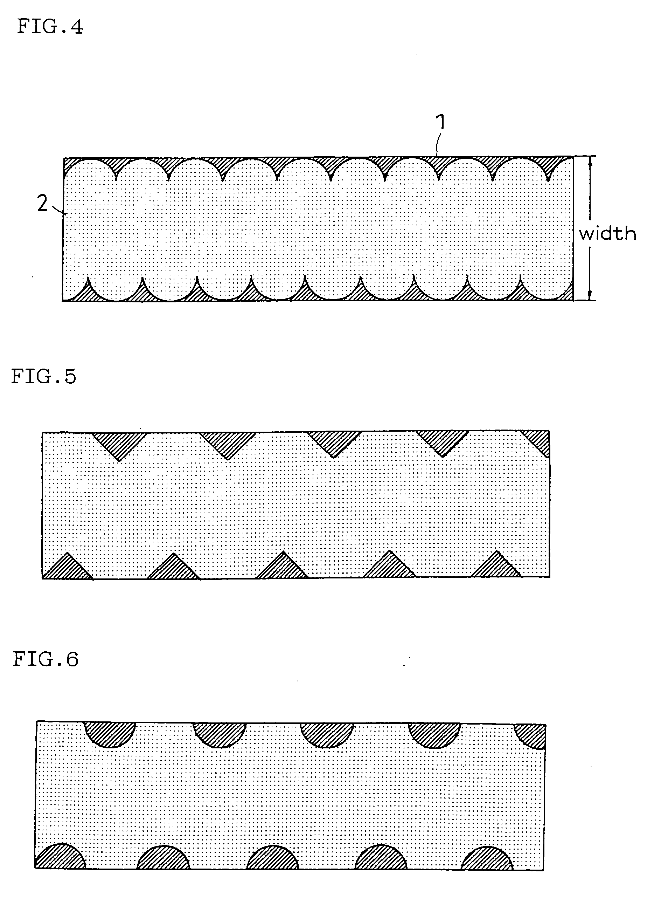

Figs. 1 to 4 are top views of surfaces of adhesive tapes of the present invention, on each of which an adhesive agent layer is formed and an adhesive tape includes non-adhesive sections 1 in both edge regions (a) of the adhesive tape in the width direction and the rest is an adhesive section 2. A non-adhesive section 1 has a part of an edge (b) of the adhesive tape in the width direction serving as an outer periphery (b') of the non-adhesive sections 1 and the non-adhesive sections 1 are formed consecutively along the length direction of the adhesive tape. In each of the non-adhesive sections 1, the outer periphery (b') and outer peripheries (d) with both end points (c) of the outer periphery (b') as start points thereof forms tapered shapes with the tip narrowing in size in the direction toward the interior. In Fig. 1, a shape of a non-adhesive section 1 is of a triangle; in Fig. 2, a shape of a non-adhesive section 1 is of a semi-circle; in Fig. 3, a shape of a non-adhesive section 1 is of a trapezoid; and in Fig. 4, a shape of a non-adhesive section 1 is of an inwardly curved semicircle. In each of the adhesive tapes of Figs. 1 to 4, an end point (c) of an outer periphery (b') of a non-adhesive section 1 is in contact with an end point (c) of the outer periphery (b') of the non-adhesive section 1 adjacent thereto and the non-adhesive sections 1 in the same shape are consecutively formed in the both edge regions (a).

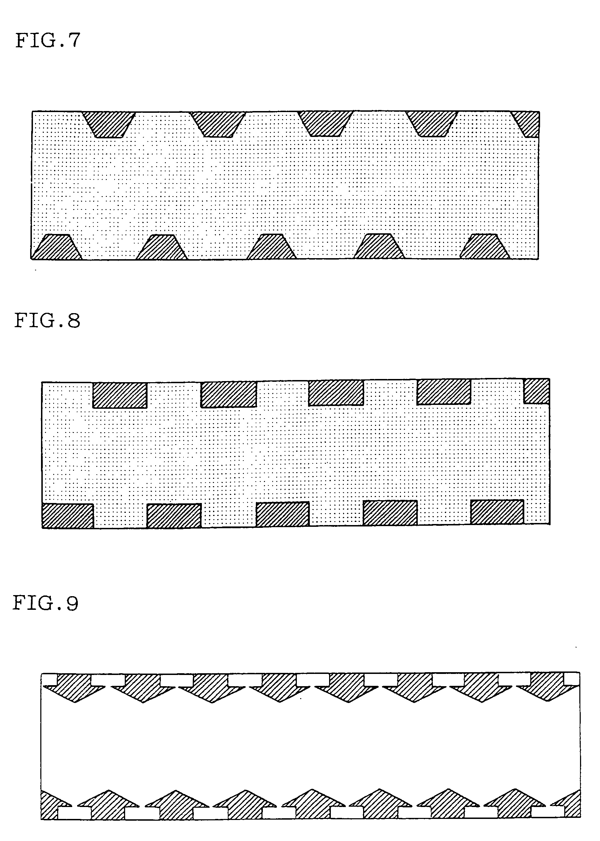

Note that while in Figs. 1 to 4, the edge (b) is a linear side (in a straight line), the edge (b) is not limited to the linear side (in a straight lien), but may be a curve such as a wavy line. Furthermore, a shape of a non-adhesive section 1 shown in each of Figs. 1 to 4 is presented only by way of an example, but can further be formed in the shape of a more complex design. In that case as well, it is preferable that a non-adhesive section 1 is of a tapered shape. Moreover, in Figs . 1 to 4, while an adjacent non-adhesive section 1 is in contact with the non-adjacent section 1 in consideration, no necessity arises, as in Figs. 5 to 8, for non-adhesive sections 1 being in contact with each other at end points (c). Fig. 8 is an example in which non-adhesive sections 1 each in the shape of a rectangle are provided. Fig. 9 is an example in which a non-adhesive section 1 is in the shape of an arrow designed from a rectangle as a base. Furthermore, non-adhesive sections 1 do not necessarily require arrangement at an equal spacing there between as far as consecution thereof is ensured. Non-adhesive sections may be formed only in one edge region of the adhesive tape.

The adhesive tape may include non-adhesive sections 1 and adhesive section or sections 2 in respective colors in consideration of design. For example, in a case where a substrate and an adhesive agent layer are transparent, the adhesive section 2 is also transparent. In such a case, while non-adhesive sections 1 may be transparent, the presence of the non-adhesive sections 1 is, if colored, made distinct coloring of a non-adhesive section can be chromatic and in addition thereto, semi-transparent or chromatic transparent. Furthermore, a pattern is provided in a region of a non-adhesive section 1, wherein a dotted pattern may be used and character printing of an instruction such as "please lift and peel here" may be added.

In non-adhesive sections 1 in both edge regions (a) of each of Figs. 1 to 4, a pattern length (L : outer periphery b') in the length direction of the non-adhesive section 1 shifts in the length direction by a half pattern (L/2) relative to a corresponding counter pattern. In Figs. 5 to 9 as well, non-adhesive sections 1 in both edge regions (a) shift in the length direction from each other. Note that while a pattern length (L) in a length direction has no specific limitation thereto, it is preferably that in a case where a width of an adhesive tape is in the range of from 25 to 50 mm, the pattern length (L) is selected to be on the order in the range of from 10 to 50 mm. Furthermore, a width of each of both edge regions (a) is preferably on the order in the range from 1/10 to 1/3 of a width of an adhesive tape and more preferably in the range of 1/6 to 1/3 thereof. For example, in Fig. 1, in a case where a width of an adhesive tape is 50 mm, non-adhesive patterns shifts a half pattern (10 mm) in the length direction between corresponding patterns facing each other on both edge regions if a pattern length (L) is 20 mm and a width of a non-adhesive section 1 in each of both edge regions (a) (a height of a triangle with an outer periphery (b') as a base) is 10 mm. When non-adhesive sections 1 shift by a half pattern between both edge regions (a), a length (M) of an adhesive section 2 in the width direction of the adhesive tape takes 40 mm over the entire length direction, resulting in stable adhesive characteristic.

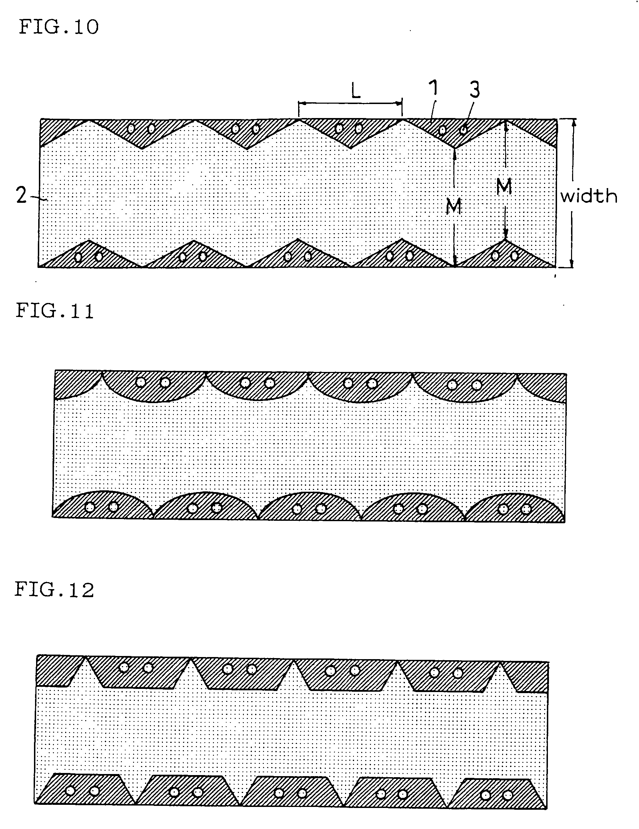

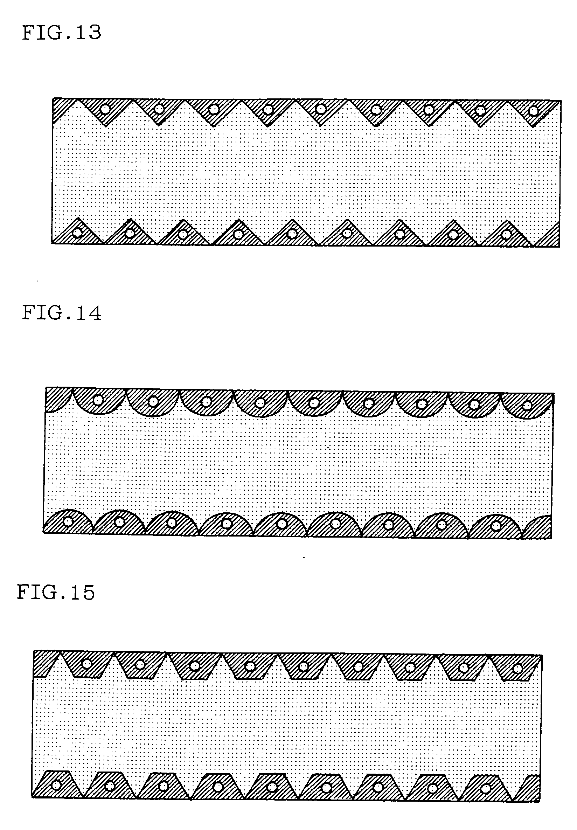

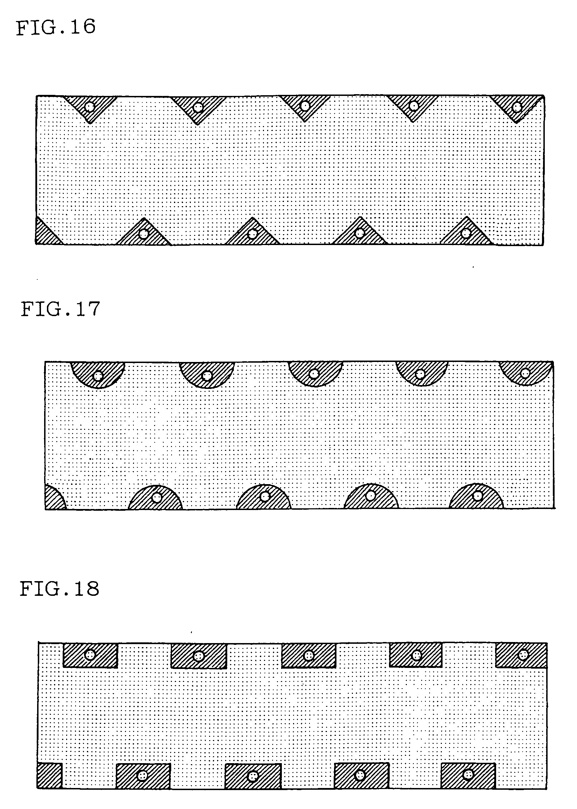

A shape of each of the non-adhesive sections 1 on a surface of an adhesive tape of the present invention on which an adhesive agent layer is formed may be one having an inner periphery 3 as shown in Figs. 10 to 19. One inner periphery or plural inner peripheries may be provided. A section having an inner periphery 3 of a non-adhesive section as an outer periphery thereof can be served as an adhesive section 2. No specific limitation is imposed on a shape of an inner periphery 3, a size thereof is in the range of from 1 to 40% in area fraction of a corresponding non-adhesive section 1 on the surface of the adhesive tape on which the adhesive agent layer is formed.

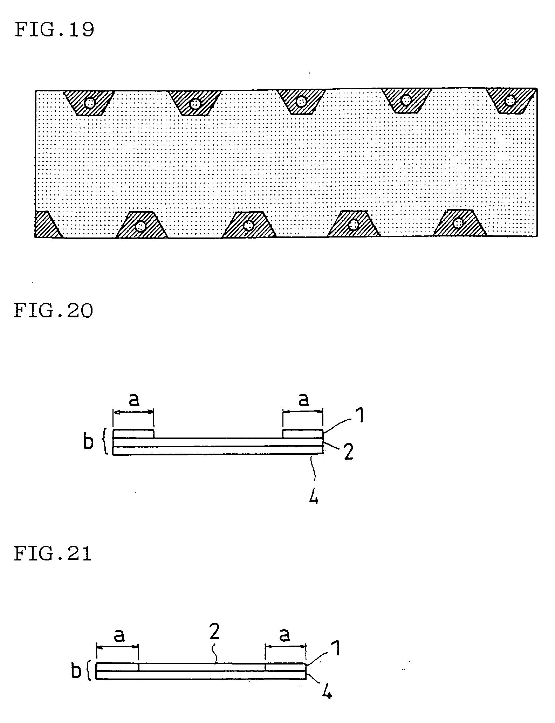

A sectional view of an adhesive tape of the present invention can be, as an example, of a structure in which for example, as shown in Fig. 20, an adhesive agent layer 2 is formed on one surface of a substrate 4 and non-adhesive sections 2 are laminated in edge regions (a) of the one surface. Alternatively, as shown in Fig. 21, the structure may be such that an adhesive section 2 and non-adhesive sections 1 are formed directly on one surface of a substrate 4.

No specific limitation is imposed on the substrate 4 but there are exemplified, as substrates, various kinds of plastic films, paper such as kraft paper, polyethylene laminate paper and a metal foil. A thickness of the substrate 4 is usually on the order in the range of from 10 to 150 µm. As for adhesive agents, while no specific limitation is imposed thereon, there can be used publicly known adhesives properly selected from the group consisting various kinds of rubber based, acrylic based and SIS based adhesives. No specific limitation is imposed on the thickness of then adhesive agent layer 2 either, but a thickness is usually set in the range of from 3 to 50 µm.

A non-adhesive section 1 is formed with the non-adhesive film layer. As materials of the non-adhesive film, there can be exemplified a composition obtained by compounding colorant components such as pigment, dye into binder components capable of forming the non-adhesive film such as paint, ink and a rear surface treatment agent in proper proportions. Furthermore, as the non-adhesive film as the layer, there can also be used a non-adhesive film or sheet. While no specific limitation is imposed on a thickness of a non-adhesive section 1 either, in a case of a structure shown in Fig. 20 a thickness of the non-adhesive section 1 requires a value enough to shield an influence of an adhesive property of the adhesive agent layer 2. A thickness of a non-adhesive section is commonly on the order in the range of from 0.1 to 5 µm. Moreover, on an adhesive tape of the present invention, there can be formed, if necessary, a rear surface treatment layer, an under coat, a print layer and others. A thickness of an adhesive tape as a whole is on the order in the range of from 15 to 150 µm.

While a production method for an adhesive tape of the present invention is not specifically limited, a method can be adopted which includes the steps of: forming a non-adhesive film layer, in which non-adhesive sections 1 are formed, on the opposite surface of the substrate 4 of the adhesive tape to one surface thereof on which an adhesive agent layer is formed; thereafter, winding the substrate into a roll; then, rewinding the roll to transfer the non-adhesive film onto the one surface on which the adhesive agent layer is formed to form the non-adhesive sections 1.

### [Examples]

While description will be given of the present invention below on the basis of examples, it should be understood that the present invention is not to be limited by the examples in any way.

In examples and comparative examples, as an adhesive tape (a tape obtained by forming an adhesive agent layer on a substrate), No. 3200 DUNPLON TAPE made by Nitto-Denko K.K. was used and EVA based printing ink was used for formation of non-adhesive sections. Formation of non-adhesive sections was performed as follows: A pattern was formed on a surface of the adhesive tape opposite to an adhesive surface thereof with the printing ink; thereafter, the adhesive tape with the pattern was wound into a roll; and the non-adhesive film was transferred onto the surface on which the adhesive agent layer was formed by rewinding the roll.

### Example 1

An adhesive tape with the non-adhesive sections of Fig 1 (with a tape width of 50 mm, a pattern length (L) of 20 mm, an edge region (a) width of 10 mm, a shape of a non-adhesive section of a triangle, a pattern shift of 10 mm and an area fraction of the non-adhesive sections (cut into lengths each of 5 cm in a length direction) of 20%). was produced.

### Example 2

An adhesive tape with the non-adhesive sections of Fig 2 (with a tape width of 50 mm, a pattern length (L) of 20 mm, an edge region (a) width of 10 mm, a shape of a non-adhesive section of a semi-circle, a pattern shift of 10 mm and an area fraction of the non-adhesive sections (cut into lengths each of 5 cm in a length direction) of 31%). was produced.

### Comparative Example 1

An adhesive tape with the non-adhesive sections of Fig 23 (with a tape width of 50 mm, a shape of a non-adhesive section of an oblique stripe, a pattern length (at an edge) of 10 mm and an area fraction of the non-adhesive sections (cut into lengths each of 5 cm in a length direction) of 50%). was produced.

### Comparative Example 2

An adhesive tape with the non-adhesive sections of Fig 24 (with a tape width of 50 mm, a shape of a non-adhesive section of a square, a side length of 10 mm, and an area fraction of the non-adhesive sections (cut into lengths each of 5 cm in a length direction) of 50%). was produced.

The following evaluations were performed on adhesive tapes with non-adhesive sections obtained in the examples and comparative examples.

### (Evaluation Methods)

### (1) General Characteristics

General characteristics (adhesive strength, holding power and unwinding force) of the adhesive tape with non-adhesive sections were measured in conformity with JIS Z-0237. Results of the evaluations are shown in Table 1.

**Table. 1**

| | Example 1 | Example 2 | Comparative Example 1 | Comparative Example 2 |
|---|---|---|---|---|
| adhesive strength (N/mm) | 8 | 8 | 5 | 5 |
| holding power (min) | 450 | 450 | 200 | 200 |
| unwinding force (N/mm) | 4 | 4 | 2.5 | 2.5 |

### (2) Practicality Test: Easiness in Peel Operation

Each adhesive tape with non-adhesive sections was adhered to a corrugated fiberboard and 100 persons evaluated easiness in peel operation by actually peeling the adhesive tape with fingers. Results of the evaluation are shown in Table 2.

**Table. 2**

| | Example 1 | Example 2 | Comparative Example 1 | Comparative Example 2 |
|---|---|---|---|---|
| easy to peel | 98 | 97 | 10 | 5 |
| a little hard to peel | 2 | 3 | 50 | 40 |
| impossible to peel | 0 | 0 | 40 | 55 |

### (3) Tape Scratch and Turn-up test in transportation: Loading Stability

Corrugated boxes to each of which an adhesive tape with non-adhesive sections was actually adhered were stacked at five levels and evaluations were performed on whether or not an adhesive tape adhered to an adherent was peeled and turned up after an adhesive tape adhered to an adherent was scratched by a counter part to catch it. Results of the evaluations are shown in Table 3.

**Table. 3**

| | Example 1 | Example 2 | Comparative Example 1 | Comparative Example 2 |
|---|---|---|---|---|
| turn-up etc. occur | 0 | 0 | 60 | 70 |
| none of turn-up etc. occurs | 100 | 100 | 40 | 30 |

An adhesive tape of the present invention has non-adhesive sections capable of performing peel operation from an adherent to which the adhesive tape has been adhered with a high level of easiness, and is good in adhesive characteristic. In addition, a loading stability on an adherent to which the adhesive tape is adhered is good as well.

## Claims

1. An adhesive tape comprising a substrate and an adhesive agent layer formed on one surface of the substrate;
wherein a shape of non-adhesive section having an edge in a width direction of the adhesive tape as a part of an outer periphery of the shape of non-adhesive section is formed consecutively in a length direction of the adhesive tape,
in at least one edge region in the width direction of the adhesive tape on a surface thereof on which the adhesive agent layer is formed,
and an area fraction of the non-adhesive sections on the surface on which the adhesive agent layer is formed is in the range of from 1 to 40%.

2. The adhesive tape according to claim 1, wherein the shape of non-adhesive section is such that the edge of the adhesive tape which is the outer periphery of the non-adhesive section and an outer periphery having a start point at least one end point on the edge form a tapered shape with a tip narrowing in size in a direction toward the interior.

3. The adhesive tape according to claim 1 or 2, wherein the shape of non-adhesive section is at least one shape selected from the group consisting of a triangle, a semi-circle, an ellipse, and a trapezoid, each of which has the edge of the adhesive tape with which the non-adhesive section is formed as one side.

4. The adhesive tape according to any of claims 1 to 3, wherein the shape of non-adhesive section has an inner periphery.

5. The adhesive tape according to any of claims 1 to 4, wherein an end point on the edge of the adhesive tape which is part of the outer periphery of the non-adhesive section is in contact with an end point on the edge of the adhesive tape which is part of the outer periphery of an adjacent non-adhesive section.

6. The adhesive tape according to any of claims 1 to 5, wherein the non-adhesive sections are all of the same shape.

7. The adhesive tape according to any of claims 1 to 6, wherein the non-adhesive sections are formed in both edge regions of the adhesive tape in a width direction on the surface thereof on which the adhesive agent layer is formed and shapes of the non-adhesive sections at one edge region and shapes of the non-adhesive sections at the other edge region are in axial symmetry with respect to a center line in a width direction.

8. The adhesive tape according to any of claims 1 to 6, wherein the non-adhesive sections are formed in both edge regions of the adhesive tape in a width direction on the surface thereof on which the adhesive agent layer is formed and shapes of the non-adhesive sections in one edge region and shapes of the non-adhesive sections at the other edge region are shifted between corresponding ones facing to each other in the both edge regions thereof in a length direction.

9. The adhesive tape according to any of claims 1 to 8, wherein the non-adhesive sections are formed by laminating a non-adhesive film as a layer on the adhesive agent layer.

10. A production method for an adhesive tape according to claim 1 comprising the steps of:
forming a non-adhesive film as a layer, in which non-adhesive sections are formed, on the opposite surface of a substrate of the adhesive tape to one surface thereof on which an adhesive agent layer is formed;
thereafter, winding the substrate into a roll;
then, rewinding the roll to transfer the non-adhesive film onto the one surface on which the adhesive agent layer is formed to form the non-adhesive sections.
